# FASCICULE DE BREVET EUROPEEN

(11) **EP 1 425 196 B1**
(45) Date de publication et mention de la délivrance du brevet: **01.06.2005**
(21) Numéro de dépôt: 02774827.6
(22) Date de dépôt: 24.07.2002
(51) Int. Cl.: B60K 1/04, H01M 2/10

(54) **VEHICULE AUTOMOBILE COMPRENANT UNE PILE A COMBUSTIBLE ET DES MOYENS D'EVACUATION DES GAZ D'HYDROGENE**
FAHRZEUG MIT BRENNSTOFFZELLE UND MITTELN ZUR ABFUHR VON WASSERSTOFF
MOTOR VEHICLE COMPRISING A FUEL CELL AND HYDROGEN GAS EVACUATING MEANS

(30) Priorité: 10.09.2001 FR 0111657
(43) Date de publication de la demande: 09.06.2004
(73) Titulaire: Peugeot Citroen Automobiles SA, 92200 Neuilly sur Seine (FR)
(72) Inventeur: COTTARD, Christophe, F-92800 Puteaux (FR); CAMPANELLA, Thierry, F-91310 Linas (FR)
(74) Mandataire: Robert, Jean-François
(86) Numéro de dépôt international: PCT/FR2002/002636
(87) Numéro de publication internationale: WO 2003/035419

(56) Documents cités:
- EP-A- 0 677 412
- DE-A- 10 026 268
- DE-C- 4 412 451

## Description

La présente invention concerne un véhicule automobile pourvu d'une pile à combustible alimentée en hydrogène.

Elle se rapporte plus particulièrement à un véhicule automobile comprenant une pile à combustible logée dans un compartiment avant du véhicule, reliée à un réservoir d'hydrogène d'alimentation de la pile logé dans un compartiment arrière du véhicule, le véhicule étant pourvu de moyens d'évacuation des gaz d'hydrogène non consommés par la pile, comme connu par DE-C-44 124 51.

On connaît des véhicules automobiles sur lesquels ont été montées des piles à combustibles du type à électrolyte polymère, alimentées en hydrogène. Les piles à combustible peuvent être utilisées comme source d'énergie principale, destinées à propulser le véhicule au moyen d'un groupe motopropulseur de type électrique, ou comme source d'énergie auxiliaire, par exemple en appoint d'un groupe motopropulseur principal de type thermique.

Le développement de ce type de véhicule est encore très limité ou au stade de l'expérimentation. L'une des raisons majeures pour lesquelles les piles à combustibles tardent à être exploitées massivement, notamment sur des véhicules destinés au grand public, réside incontestablement dans les dangers inhérents au confinement et à la manipulation de l'hydrogène.

Il est en effet notoire que l'hydrogène est un gaz extrêmement inflammable et détonant. On sait par exemple que la limite d'inflammabilité inférieure de l'hydrogène se situe autour de 4% d'hydrogène dans l'air ambiant, tandis que la limite de détonnabilité inférieure se situe autour de 18% d'hydrogène dans l'air ambiant.

Ainsi, on comprendra qu'un véhicule automobile à pile à combustible, pourvu d'un réservoir de stockage de l'hydrogène pour l'alimentation de la pile présente des risques d'inflammation et d'explosion particulièrement importants.

Le but de la présente invention est de pallier les inconvénients ci-dessus en proposant un véhicule automobile comportant une pile à combustible alimentée en hydrogène qui garantisse le meilleur niveau de sécurité et de sûreté de fonctionnement.

La présente invention a donc pour objet un véhicule automobile selon la revendication 1.

Le véhicule automobile selon l'invention peut également comporter une ou plusieurs des caractéristiques suivantes :
- les conduits d'évacuation sont conformés pour déboucher en partie arrière du véhicule,
- les moyens d'évacuation comporte au moins un conduit d'évacuation avant des gaz d'hydrogène émanant de la pile à combustible, dont une partie avant est reliée à ladite pile et une partie arrière est pourvue d'un auvent sensiblement vertical débouchant en partie haute du véhicule,
- les moyens d'évacuation comprennent au moins un conduit d'évacuation arrière des gaz d'hydrogène émanant du compartiment arrière, pourvu d'un auvent sensiblement vertical débouchant en partie haute du véhicule,
- les auvents des conduits d'évacuation respectivement avant et arrière sont ménagés de part et d'autre des côtés latéraux du véhicule, dans un espace délimité extérieurement par la carrosserie du véhicule et intérieurement par au moins un élément de structure et/ou de garnissage adjacent,
- les auvents des conduits d'évacuation respectivement avant et arrière sont ménagés du même côté latéral du véhicule, dans un espace délimité extérieurement par la carrosserie du véhicule et intérieurement par au moins un élément de structure et/ou de garnissage adjacent,
- la pile à combustible est reliée au réservoir d'hydrogène par un conduit d'alimentation sur lequel est prévu au moins un moyen de contrôle et/ou de régulation du flux d'alimentation de la pile en gaz d'hydrogène, tel qu'une électrovanne, un régulateur de pression, ou une soupape de surpression,
- les conduits d'évacuation comportent au moins une canalisation d'échappement reliant le conduit d'alimentation en gaz d'hydrogène à l'un des conduits d'évacuation avant et/ou arrière, tandis que l'un au moins des moyens de contrôle et/ou de régulation du flux d'alimentation de la pile en gaz d'hydrogène est disposé sur ladite canalisation,
- les moyens d'évacuation des gaz d'hydrogène comprennent un circuit de purge et/ou d'inertage des conduits et/ou de la pile à combustible, apte à injecter sous pression un gaz inerte embarqué dans le véhicule à l'intérieur du conduit d'alimentation de la pile, au travers d'un moyen de commande automatique du flux de gaz inerte à injecter,
- un circuit de purge et/ou d'inertage des conduits et/ou de la pile, apte à injecter sous pression un gaz inerte extérieur au véhicule à l'intérieur du conduit d'alimentation de la pile, peut être raccordé au conduit d'alimentation au travers d'un moyen de commande manuel du flux de gaz inerte à injecter,
- les moyens d'évacuation des gaz d'hydrogène comportent des moyens de limitation de la pression d'hydrogène contenu dans le réservoir, tels qu'une soupape de surpression et/ou un disque de rupture permettant une mise à l'échappement instantanée,
- le conduit d'évacuation avant et le conduit d'alimentation de la pile cheminent côte à côte sur au moins une partie de leur longueur à proximité du soubassement du véhicule,
- le compartiment arrière est constitué de deux demi-coques aptes à être positionnées l'une contre l'autre au niveau de leur surface de contact respectives, de formes sensiblement complémentaires, une première demi-coque étant rigidement liée au véhicule tandis que la deuxième demi-coque, dans laquelle est monté le réservoir d'hydrogène, est solidarisée au véhicule via des moyens de fixation démontables manuellement, et
- les compartiments avant et arrière sont pourvus de capteurs aptes à mesurer la concentration d'hydrogène dans ces compartiments, lesdits capteurs étant reliés à un boîtier central de gestion électronique de la pile.

Les caractéristiques de l'invention, mentionnées ci-dessus, ainsi que d'autres, apparaîtront plus clairement à la lecture de la description suivante, en se référant aux dessins annexés sur lesquels :
- la figure 1 est une vue en perspective d'une partie d'un véhicule automobile conforme à l'invention,
- la figure 2 est une vue schématique d'un véhicule automobile pourvu d'une pile à combustible selon l'invention, montrant les moyens d'évacuation des gaz d'hydrogène non consommés par la pile, et
- la figure 3 est une vue en perspective d'un détail du véhicule selon l'invention.

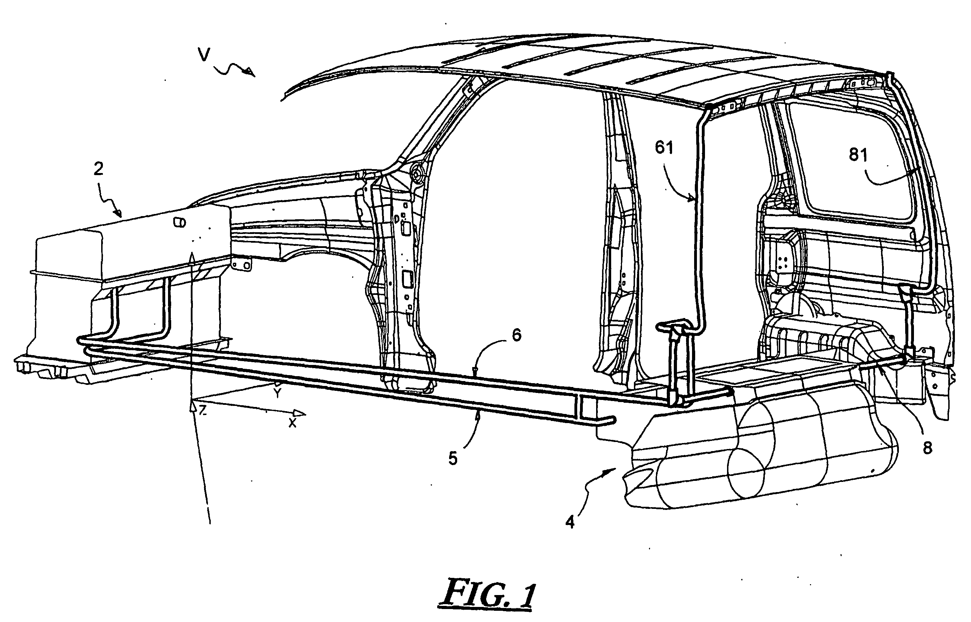

On a représenté à la figure 1 un véhicule automobile comprenant une pile à combustible 1 logée dans un compartiment avant 2 du véhicule.

Selon l'invention, la pile 1 est reliée par un conduit d'alimentation 5 à un réservoir d'hydrogène 3 d'alimentation de la pile 1. On supposera pour la suite de la description un stockage sous forme gazeuse de l'hydrogène dans le réservoir.

Notons également que le terme « réservoir » désigne de façon générique différents agencements possibles des moyens de stockage de l'hydrogène. Il peut par exemple désigner une pluralité de réservoir disposés côte à côte.

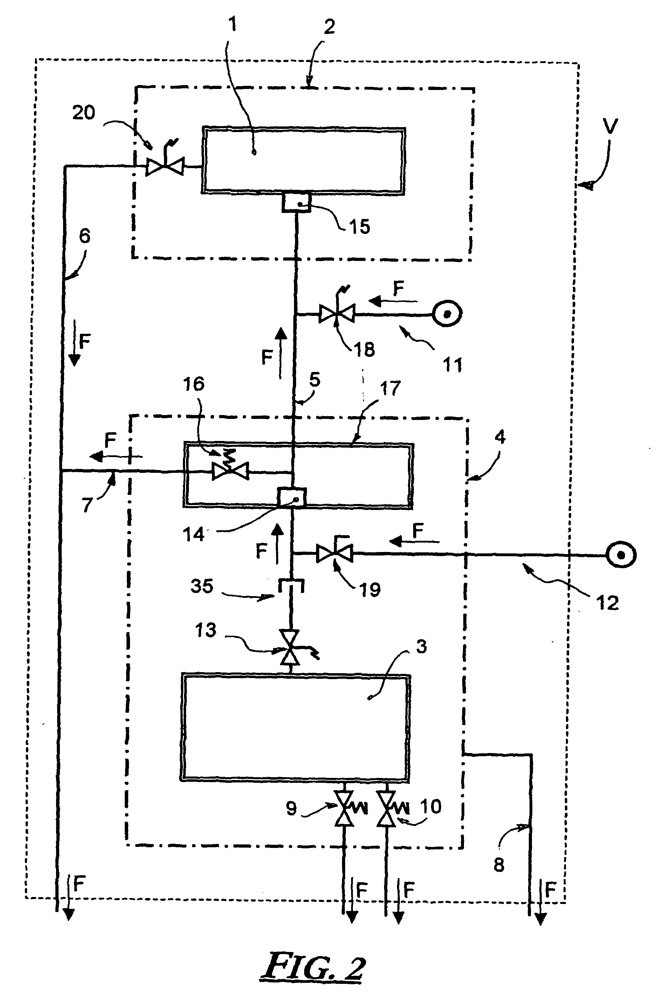

Comme le montrent les figures 1 et 2, le réservoir d'hydrogène 3 est logé dans un compartiment arrière 4 du véhicule.

Selon l'invention, les compartiments avant 2 et arrière 4 peuvent avantageusement être pourvus de capteurs (non représentés) aptes à évaluer la teneur en hydrogène des gaz se trouvant dans ces compartiments 2, 4. Ces capteurs sont reliés à un boîtier central de gestion électronique de la pile 1 (non représenté) qui peut commander en conséquence différents moyens de contrôle et/ou de régulation des flux gazeux, comme par exemple ceux qui seront décrits ultérieurement. Les compartiments avant 2 et arrière 4 constituent ainsi des volumes à teneur d'hydrogène controlée dans une optique de sécurité.

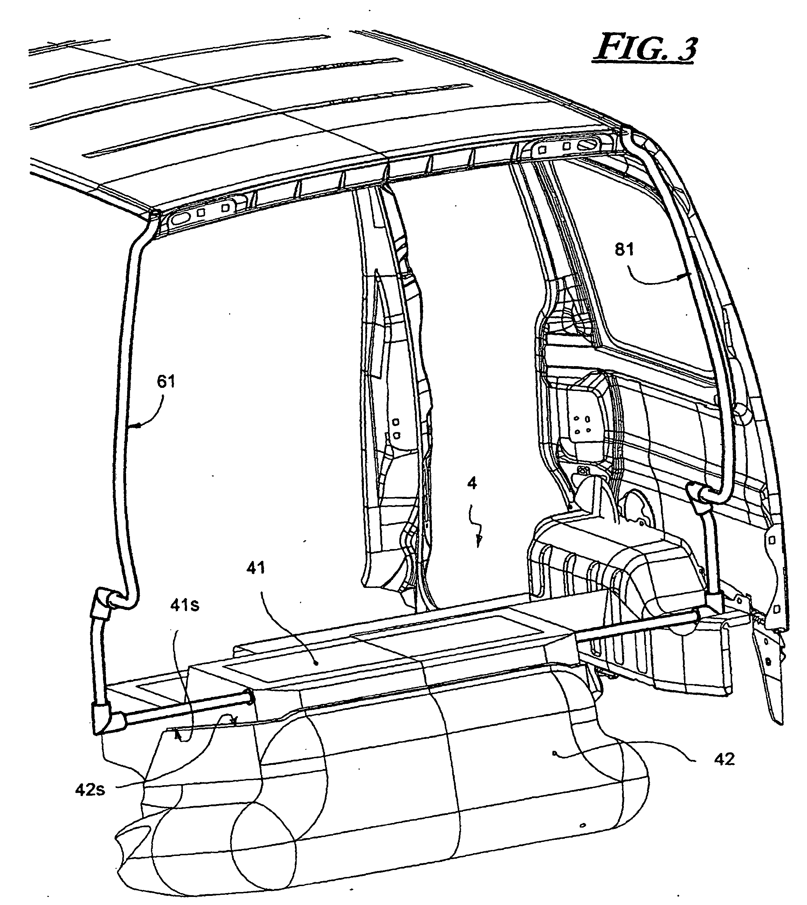

Dans un mode particulier de réalisation de l'invention, le compartiment arrière 4 peut être constitué de deux demi-coques 41, 42 aptes à être positionnées l'une contre l'autre au niveau de leur surface de contact 41s, 42s respectives, de formes sensiblement complémentaires (figure 3). Des moyens d'étanchéité tels qu'un joint plat, peuvent être prévus entre les deux demi-coques afin d'obtenir un compartiment suffisamment étanche pour permettre la mesure de la concentration d'hydrogène.

Dans ce mode de réalisation, une première demi-coque 41 est rigidement liée au véhicule tandis que la deuxième demi-coque 42, dans laquelle est logé le réservoir d'hydrogène 3, est solidarisée au véhicule via des moyens de fixation démontables.

En effet, pour des raisons de maintenance ou simplement pour remplacer un réservoir vide par un réservoir plein, il peut être avantageux de pouvoir démonter aisément ce réservoir d'hydrogène du véhicule. Ainsi la demi-coque 42 contenant le réservoir 3 peut être supportée par des moyens de coulissement longitudinaux (non représenté), permettant de la déplacer depuis sa position avant, dans laquelle elle ferme le compartiment arrière 4 en association avec la demie-coque fixe 41, jusqu'à une position déployée en arrière du véhicule, dans laquelle un opérateur peut aisément la démonter des moyens de coulissement pour la remplacer par une autre. Le démontage manuel doit s'entendre comme étant relativement rapide et faisant appel à un outillage simple.

Dans le cas de figure décrit ci-dessus, des moyens de raccordement 35 seront bien entendu à prévoir entre le réservoir d'hydrogène 3 et le conduit d'alimentation 5 de la pile 1.

Selon l'invention, le véhicule automobile comprend des moyens d'évacuation des gaz d'hydrogène non consommés par la pile 1. Les gaz non consommés sont d'une part les gaz n'ayant pas encore été introduits dans la pile 1 et d'autre part, les fuites d'hydrogène résultant du fonctionnement normal de la pile 1.

En référence aux figures 1 à 3, ces moyens d'évacuation comportent tout d'abord des conduits d'évacuation 6, 7, 8 débouchant en partie haute du véhicule, à l'arrière de celui-ci. Ainsi les gaz d'hydrogène sont évacués au-dessus du véhicule et vers l'arrière de celui-ci. On notera qu'un débit minimal des gaz d'hydrogène sera assuré lors du déplacement du véhicule en raison de la dépression réalisée aux sorties des conduits.

Les limites physiques du véhicule sont représentées en traits pointillés V sur la figure illustrant schématiquement les moyens de l'invention.

Selon l'invention, les conduits d'évacuation comportent un conduit d'évacuation avant 6 dont une partie avant est reliée à la pile 1. Sa partie arrière est pourvue d'un auvent 61 sensiblement vertical débouchant en partie haute du véhicule (figures 1 et 3).

En sortie de pile 1, des moyens de contrôle 20 des gaz d'hydrogène, tels qu'une électrovanne peuvent être montés sur le conduit d'évacuation avant 6. Une telle électrovanne peut être commandée automatiquement par le boîtier central de gestion électronique de la pile 1.

A l'arrière du véhicule, le compartiment arrière 4 est prolongé par un conduit d'évacuation arrière 8 pourvu d'un auvent 81 sensiblement vertical débouchant en partie haute du véhicule.

Dans le cas où le compartiment arrière 4 comporte les deux demi-coques 41, 42 précédemment décrites, le conduit d'évacuation arrière 8 constituerait bien entendu un prolongement de la demi-coque 41 liée rigidement au véhicule.

Comme le montrent les figures 1 et 3, les conduits d'évacuation avant 6 et arrière 8 peuvent être ménagés de part et d'autre des côtés latéraux du véhicule. Ces conduits pourront être logés dans un espace délimité extérieurement par la carrosserie du véhicule et intérieurement par un élément de structure ou de garnissage. De cette façon, les conduits sont invisibles de l'utilisateur et n'altèrent pas l'esthétique générale du véhicule.

Bien entendu, dans une variante de réalisation de l'invention (non représentée), les conduits avant 6 et arrière 8 peuvent être ménagés du même côté latéral du véhicule.

Comme indiqué précédemment, la pile à combustible 1 est reliée au réservoir d'hydrogène 3 par un conduit d'alimentation 5. Le long de ce conduit 5 sont prévus des moyens de contrôle et/ou de régulation du flux d'alimentation de la pile 1 en gaz d'hydrogène.

En particulier, ces moyens de contrôle et de régulation comprennent une ou plusieurs électrovannes 13 de commande du flux hydrogène, reliée au boîtier central (non représenté) de gestion électronique de la pile 1 (figure 2). Une telle électrovanne 13 permet sélectivement d'obturer complètement le conduit d'alimentation 5, de l'ouvrir partiellement ou complètement en fonction du régime de fonctionnement souhaité.

Egalement, ces moyens de contrôle et de régulation comprennent un ou plusieurs régulateurs de pression, tel que des détendeurs classiques connus de l'homme du métier, permettant d'amener les gaz d'hydrogène contenus dans le réservoir sous haute pression, par exemple de l'ordre de 300 bars, à une pression finale adéquate pour le fonctionnement de la pile à combustible 1, par exemple de l'ordre de 1,6 bar. Comme illustré à la figure 2, un détendeur intermédiaire 14 peut être prévu en sortie du réservoir d'hydrogène pour amener les gaz d'hydrogène à une pression intermédiaire, par exemple de l'ordre de 7 bars.

En outre, ces moyens de contrôle et de régulation comprennent une ou plusieurs soupapes de surpression 16, afin de garantir que la pression des gaz d'hydrogène dans le conduit d'alimentation n'excède pas une valeur critique. Par exemple, en sortie du détendeur intermédiaire 14 évoqué ci-dessus, ramenant la pression des gaz d'hydrogène de 300 à 7 bars comme indiqué dans l'exemple, on peut prévoir une soupape de surpression 16, de type mécanique, disposée sur le conduit d'alimentation et conformée pour libérer une partie des gaz d'hydrogène dès lors que la pression excède 10 bars.

Avantageusement, en cas de surpression dans le conduit d'alimentation, les gaz d'hydrogène libérés par la soupape de surpression 16 peuvent être acheminés vers l'un des conduits d'évacuation 6, 8 par une canalisation 7 reliant ce dernier 6, 8 au conduit d'alimentation 5.

Dans un mode de réalisation de l'invention, une partie des moyens de contrôle et/ou de régulation du flux d'hydrogène peut être supportée par une même platine 17 formant ainsi un même sous-ensemble. Par exemple, un détendeur 14 et une soupape de surpression 16 peuvent être agencés sur une même platine 17 pouvant être désignée sous les termes « platine de détente ». D'autres moyens de contrôle et/ou de régulation du flux d'hydrogène peuvent également être montés sur la platine 17, comme par exemple l'électrovanne 13 commandant l'alimentation en gaz d'hydrogène (non représentée dans ce mode de réalisation). Dans une variante de réalisation de l'invention, on comprendra que cette platine 17 peut également servir de support à une partie des conduits tels que les conduits d'évacuation des gaz d'hydrogène.

En variante, on comprendra qu'une partie de ces moyens de contrôle et/ou de régulation du flux d'hydrogène, notamment l'électrovanne 13 peut être ménagée aux extrémités du conduit d'alimentation 5. En effet, l'électrovanne 13 peut être montée solidaire du réservoir arrière 3 contenant l'hydrogène, de façon à éliminer tout risque de perte d'hydrogène en cas d'extraction volontaire ou accidentelle du compartiment arrière 4.

Le véhicule automobile selon l'invention comprend également d'autres moyens d'évacuation des gaz d'hydrogène. En effet, ceux-ci comprennent un circuit de purge et/ou d'inertage 11 automatique des conduits 5, 6 et/ou de la pile à combustible 1, apte à injecter sous pression un gaz inerte embarqué dans le véhicule à l'intérieur du conduit d'alimentation 5 de la pile 1, au travers d'un moyen de commande automatique 18 du flux de gaz inerte à injecter. Ce moyen de commande automatique 18 peut être par exemple une électrovanne commandée de façon automatique par un boîtier central de gestion électronique de la pile 1.

Selon l'invention, un circuit de purge et/ou d'inertage 12 annexe des conduits et/ou de la pile 1, apte à injecter sous pression un gaz inerte extérieur au véhicule à l'intérieur du conduit d'alimentation 5 de la pile 1, au travers d'un moyen de commande manuel 19 du flux de gaz inerte à injecter. Ce moyen de commande manuel 19 peut être par exemple un moyen de raccordement mécanique associé à une ou plusieurs vannes disposées en amont et/ou aval du moyen de raccordement et destinée à mettre en communication le circuit de purge et le conduit d'alimentation.

On comprendra que les jonctions respectives des circuits de purge et/ou d'inertage 11, 12 sur le conduit d'alimentation 5 peuvent être localisées en différents points du conduit d'alimentation 5.

Par exemple, en référence à la figure 2, les points de jonction des circuits de purge et/ou d'inertage automatique 11 et annexe 12 qui viennent d'être décrits peuvent être situés respectivement en aval et en amont du détendeur intermédiaire 14 prévu en sortie du réservoir d'hydrogène 3, sur le conduit d'alimentation 5 de la pile.

Par ailleurs, les moyens d'évacuation des gaz d'hydrogène selon l'invention comportent également des moyens de limitation 9, 10 de la pression des gaz d'hydrogène contenus dans le réservoir 3. Par exemple, ceux-ci peuvent être constitués d'une soupape de surpression 9 conformée pour évacuer l'hydrogène contenu dans le réservoir sous une pression de l'ordre de 300 bars, dès lors que la pression excède une valeur limite de l'ordre de 340 bars.

Ces moyens de limitation de la pression peuvent également être constitués d'un disque de rupture 10, bien connu de l'homme métier, généralement constitué d'une membrane fermant hermétiquement une ouverture ménagée sur la paroi extérieure du réservoir 3 et d'un pointeau. Sous l'effet de la pression, lamembrane vient au contact du pointeau et se perfore de façon irréversible, libérant ainsi les gaz contenus dans le réservoir.

Le fonctionnement des moyens d'évacuation des gaz d'hydrogène selon la présente invention va maintenant être expliqué, en référence à la figure 2 et aux différentes situations de vie qui peuvent être définies comme suit.

Dans une première situation de vie, la pile à combustible est en fonctionnement. Selon la puissance délivrée par la pile, il peut être nécessaire de purger celle-ci de façon plus ou moins fréquente, de façon à évacuer l'eau accumulée, ce qui a pour effet de chasser simultanément les gaz d'hydrogène en dehors du véhicule.

Dans une seconde situation de vie, la pile à combustible est arrêtée. Pour éviter des réactions électrochimiques qui sont classiquement engendrées au sein de la pile à l'arrêt, il est utile d'inerter cette dernière, c'est à dire de remplacer les gaz d'hydrogène qu'elle renferme par un gaz inerte, par exemple de l'azote.

Dans une troisième situation de vie, la pile à combustible est également arrêtée mais le véhicule fait l'objet d'une opération de maintenance ou de remplacement du réservoir. Pour des raisons de sécurité liée à l'arrêt de la pile, il est nécessaire d'empêcher les risques d'accumulation du mélange gazeux. Il convient donc de purger le véhicule, c'est à dire de remplacer les gaz d'hydrogène présents dans tous les conduits ainsi que dans la pile par un gaz inerte, tel que l'azote.

On notera, en référence à la figure 2 que les sens de circulation des flux gazeux dans les conduits et circuits sont indiqués par les flèches F.

Ainsi dans la première situation de vie, l'eau accumulée et les gaz d'hydrogène présents dans la pile peuvent être évacués par le conduit d'évacuation 6, sous l'effet du gaz inerte issu du circuit de purge et/ou d'inertage 11 injecté dans le conduit d'alimentation 5.

Dans la seconde situation de vie, le même gaz inerte venant du circuit de purge et/ou d'inertage 11 injecté dans le conduit d'alimentation 5 permet d'évacuer les gaz d'hydrogène.

On notera que la purge et/ou l'inertage correspondant aux première et seconde situations sont réalisées de façon totalement transparente pour le conducteur du véhicule, sous le contrôle d'un boîtier central de gestion électronique de la pile agissant sur le moyen de commande automatique 18.

Dans la troisième situation de vie, un gaz inerte venant du circuit de purge et/ou d'inertage 12 extérieur au véhicule est connecté au véhicule par un opérateur. La mise en communication du circuit de purge 12 avec le conduit d'alimentation 5 de la pile 1 est réalisée au moyen d'un moyen de commande manuel 19 sur lequel agit l'opérateur.

On notera que des clapets anti-retour (non représentés) peuvent être disposés en différents points des conduits et circuits de façon à empêcher toute circulation des flux gazeux dans des sens opposés aux flèches F.

Avantageusement, on comprend à la lecture de la description ci-dessus que le véhicule automobile comprenant une pile à combustible alimenté en hydrogène selon l'invention s'avère particulièrement sûr à utiliser en limitant les risques d'explosion et d'inflammation inhérents à la présence de l'hydrogène dans le véhicule.

Bien que l'invention ait été décrite en liaison avec mode de réalisation particulier et quelques variantes elle comprend tous les équivalents techniques des moyens décrits sans sortir du cadre des revendications.

## Revendications

1. Véhicule automobile comprenant une pile à combustible (1) logée dans un compartiment avant (2) du véhicule, reliée par un conduit d'alimentation (5) à au moins un réservoir d'hydrogène (3) d'alimentation de la pile (1) logé dans un compartiment arrière (4) du véhicule, comportant des moyens d'évacuation (5-10, 11, 12) des gaz d'hydrogène non consommés par la pile (1), **caractérisé en ce qu'**il comprend un ou plusieurs conduits d'évacuation (6-8) débouchant en partie haute du véhicule, de manière à libérer les gaz d'hydrogène sensiblement au-dessus de ce dernier.

2. Véhicule automobile selon la revendication 1, **caractérisé en ce que** les conduits d'évacuation (6-8) sont conformés pour déboucher en partie arrière du véhicule.

3. Véhicule automobile selon la revendication 1 ou 2, **caractérisé en ce que** les moyens d'évacuation (5-10, 11, 12) comporte au moins un conduit d'évacuation avant (6) des gaz d'hydrogène émanant de la pile à combustible (1), dont une partie avant est reliée à ladite pile (1) et une partie arrière est pourvue d'un auvent (61) sensiblement vertical débouchant en partie haute du véhicule.

4. Véhicule automobile selon l'une quelconque des revendications 1 à 3, **caractérisé en ce que** les moyens d'évacuation (5-10, 11, 12) comprennent au moins un conduit d'évacuation arrière (8) des gaz d'hydrogène émanant du compartiment arrière (4), pourvu d'un auvent (81) sensiblement vertical débouchant en partie haute du véhicule.

5. Véhicule automobile selon la revendication 2 ou 3, **caractérisé en ce que** les auvents (61, 81) des conduits d'évacuation respectivement avant (6) et arrière (8) sont ménagés de part et d'autre des côtés latéraux du véhicule, dans un espace délimité extérieurement par la carrosserie du véhicule et intérieurement pas au moins un élément de structure et/ou de garnissage adjacent.

6. Véhicule automobile selon la revendication 3 ou 4, caractérisé en que les auvents (61, 81) des conduits d'évacuation respectivement avant (6) et arrière (8) sont ménagés du même côté latéral du véhicule, dans un espace délimité extérieurement par la carrosserie du véhicule et intérieurement pas au moins un élément de structure et/ou de garnissage adjacent.

7. Véhicule automobile selon l'une quelconque des revendications 1 à 6, **caractérisé en ce que** la pile à combustible (1) est reliée au réservoir d'hydrogène (3) par un conduit d'alimentation (5) sur lequel est prévu au moins un moyen de contrôle et/ou de régulation du flux d'alimentation de la pile (1) en gaz d'hydrogène, tel qu'une électrovanne (13), un régulateur de pression (14, 15), ou une soupape de surpression (16).

8. Véhicule automobile selon la revendication 7, **caractérisé en ce que** les conduits d'évacuation (5-10, 11, 12) comportent au moins une canalisation d'échappement (7) reliant le conduit d'alimentation (5) en gaz d'hydrogène à l'un des conduits d'évacuation avant (6) et/ou arrière (8), tandis que l'un au moins des moyens de contrôle et/ou de régulation du flux d'alimentation de la pile (1) en gaz d'hydrogène est disposé sur ladite canalisation (7).

9. Véhicule automobile selon la revendication 7 ou 8, **caractérisé en ce que** les moyens d'évacuation des gaz d'hydrogène (5-10, 11, 12) comprennent un circuit de purge et/ou d'inertage (11) des conduits (5, 6) et/ou de la pile à combustible (1), apte à injecter sous pression un gaz inerte embarqué dans le véhicule à l'intérieur du conduit d'alimentation (5) de la pile (1), au travers d'un moyen de commande automatique (18) du flux de gaz inerte à injecter.

10. Véhicule automobile selon l'une quelconque des revendications 7 à 9, **caractérisé en ce qu'**un circuit de purge et/ou d'inertage (12) des conduits et/ou de la pile (1 ), apte à injecter sous pression un gaz inerte extérieur au véhicule à l'intérieur du conduit d'alimentation (5) de la pile (1), peut être raccordé au conduit d'alimentation (5) au travers d'un moyen de commande manuel (19) du flux de gaz inerte à injecter.

11. Véhicule automobile selon l'une quelconque des revendications 1 à 10, **caractérisé en ce que** les moyens d'évacuation des gaz d'hydrogène (5-10, 11, 12) comportent des moyens de limitation (9, 10) de la pression d'hydrogène contenu dans le réservoir (3), tels qu'une soupape de surpression (9) et/ou un disque de rupture (10) permettant une mise à l'échappement instantanée.

12. Véhicule automobile selon l'une quelconque des revendications 3 à 11, **caractérisé en ce que** le conduit d'évacuation avant (6) et le conduit d'alimentation (5) de la pile (1) cheminent côte à côte sur au moins une partie de leur longueur à proximité du soubassement du véhicule.

13. Véhicule automobile selon l'une quelconque des revendications 1 à 12, **caractérisé en ce que** le compartiment arrière (4) est constitué de deux demi-coques (41, 42) aptes à être positionnées l'une contre l'autre au niveau de leur surface de contact (41s, 42s) respectives, de formes sensiblement complémentaires, une première demi-coque (41) étant rigidement liée au véhicule tandis que la deuxième demi-coque (42), dans laquelle est monté le réservoir d'hydrogène (3), est solidarisée au véhicule via des moyens de fixation démontables manuellement.

14. Véhicule automobile selon l'une quelconque des revendications 1 à 13, **caractérisé en ce que** les compartiments avant (2) et arrière (4) sont pourvus de capteurs aptes à mesurer la concentration d'hydrogène dans ces compartiments (2, 4), lesdits capteurs étant reliés à un boîtier central de gestion électronique de la pile (1).

## Patentansprüche

1. Kraftfahrzeug mit einer Brennstoffzelle (1), die in einem vorderen Bereich (2) des Fahrzeugs untergebracht und über eine Versorgungsleitung (5) mit mindestens einem Wasserstoffbehälter (3) zu ihrer Versorgung verbunden ist, der in einem hinteren Bereich (4) des Fahrzeugs untergebracht ist, mit Mitteln (5-10, 11, 12) zum Ableiten der von der Zelle (1) nicht verbrauchten Wasserstoffgase, **dadurch gekennzeichnet, dass** es eine oder mehrere Abführleitungen (6-8) aufweist, die im oberen Bereich des Fahrzeugs münden, sodass die Wasserstoffgase im Wesentlichen über dem Fahrzeug freigegeben werden.

2. Kraftfahrzeug nach Anspruch 1, **dadurch gekennzeichnet, dass** die Abführleitungen (6-8) im hinteren Abschnitt des Fahrzeugs münden.

3. Kraftfahrzeug nach Anspruch 1 oder 2, **dadurch gekennzeichnet, dass** die Ableitungsmittel (5-10, 11, 12) mindestens eine vordere Leitung (6) zum Abführen der aus der Brennstoffzelle (1) ausströmenden Wasserstoffgase aufweisen, deren vorderer Abschnitt mit der Zelle (1) verbunden ist und deren hinterer Abschnitt mit einem im Wesentlichen vertikalen Windlauf (61) versehen ist, der im hinteren Abschnitt des Fahrzeugs mündet.

4. Kraftfahrzeug nach einem der Ansprüche 1 bis 3, **dadurch gekennzeichnet, dass** die Ableitungsmittel (5-10, 11, 12) mindestens eine hintere Leitung (8) zum Abführen der aus dem hinteren Bereich (4) ausströmenden Wasserstoffgase aufweisen, die mit einem im Wesentlichen vertikalen Windlauf (81) versehen ist, der im oberen Bereich des Fahrzeugs mündet.

5. Kraftfahrzeug nach Anspruch 2 oder 3, **dadurch gekennzeichnet, dass** die Windläufe (61, 81) der vorderen Abführleitung (6) und der hinteren Abführleitung (8) auf beiden Seiten des Fahrzeugs in einem Raum angeordnet sind, der außen von der Karosserie des Fahrzeugs und innen von mindestens einem benachbarten Element des Aufbaus und/oder der Verkleidung festgelegt ist.

6. Kraftfahrzeug nach Anspruch 3 oder 4, **dadurch gekennzeichnet, dass** die Windläufe (61, 81) der vorderen Abführleitung (6) und der hinteren Abführleitung (8) auf derselben Seite des Fahrzeugs in einem außen von der Karosserie des Fahrzeugs und innen von mindestens einem benachbarten Element des Aufbaus und/oder der Verkleidung festgelegten Raum angeordnet sind.

7. Kraftfahrzeug nach einem der Ansprüche 1 bis 6, **dadurch gekennzeichnet, dass** die Brennstoffzelle (1) über eine Versorgungsleitung (5) mit dem Wasserstoffbehälter (3) verbunden ist, wobei an der Versorgungsleitung mindestens ein Mittel zur Kontrolle und/oder Regelung des Flusses zur Versorgung der Zelle (1) mit Wasserstoffgas wie beispielsweise ein Elektroventil (13), ein Druckminderventil (14, 15) oder ein Überdruckventil (16) vorgesehen ist.

8. Kraftfahrzeug nach Anspruch 7, **dadurch gekennzeichnet, dass** die Abführleitungen (5-10, 11, 12) mindestens eine Auslassleitung (7) aufweisen, welche die Leitung (5) zum Versorgen mit Wasserstoffgas mit der vorderen Abführleitung (6) und/oder der hinteren Abführleitung (8) verbindet, während mindestens eines der Mittel zur Kontrolle und/oder Regelung des Flusses zur Versorgung der Zelle (1) mit Wasserstoffgas an dieser Leitung (7) angeordnet ist.

9. Kraftfahrzeug nach Anspruch 7 oder 8, **dadurch gekennzeichnet, dass** die Mittel (5-10, 11, 12) zum Ableiten der Wasserstoffgase eine Leitung (11) zum Entleeren und/oder Inertisieren der Leitungen (5, 6) und/oder der Brennstoffzelle (1) aufweisen, die über ein Mittel zur automatischen Steuerung (18) des Flusses an einzuspritzendem Inertgas unter Druck ein an Bord des Fahrzeugs befindliches Inertgas in die Versorgungsleitung (5) der Zelle (1) einspritzen kann.

10. Kraftfahrzeug nach einem der Ansprüche 7 bis 9, **dadurch gekennzeichnet, dass** eine Leitung (12) zum Entleeren und/oder Inertisieren der Leitungen und/oder der Zelle (1), die unter Druck ein Inertgas von außerhalb des Fahrzeugs in die Versorgungsleitung (5) der Zelle (1) einspritzen kann, über ein Mittel zur manuellen Steuerung (19) des Flusses an einzuspritzendem Inertgas mit der Versorgungsleitung (5) verbunden sein kann.

11. Kraftfahrzeug nach einem der Ansprüche 1 bis 10, **dadurch gekennzeichnet, dass** die Mittel zum Ableiten der Wasserstoffgase (5-10, 11, 12) Mittel (9, 10) zum Begrenzen des Drucks des im Behälter (3) enthaltenen Wasserstoffs wie beispielsweise ein Überdruckventil (9) und/oder eine Berstscheibe (10) aufweisen, die ein sofortiges Auslassen ermöglichen.

12. Kraftfahrzeug nach einem der Ansprüche 3 bis 11, **dadurch gekennzeichnet, dass** die vordere Abführleitung (6) und die Versorgungsleitung (5) der Zelle (1) über mindestens einen Abschnitt ihrer Länge in der Nähe des Fahrzeug-Unterbaus nebeneinander laufen.

13. Kraftfahrzeug nach einem der Ansprüche 1 bis 12, **dadurch gekennzeichnet, dass** der hintere Bereich (4) aus zwei Halbschalen (41, 42) gebildet wird, die an ihren Kontaktflächen (41s, 42s) von im Wesentlichen komplementärer Form aneinander positioniert werden können, wobei eine erste Halbschale (41) starr mit dem Fahrzeug verbunden ist, während die zweite Halbschale (42), in welcher der Wasserstoffbehälter (3) montiert ist, über manuell abnehmbare Befestigungsmittel mit dem Fahrzeug verbunden ist.

14. Kraftfahrzeug nach einem der Ansprüche 1 bis 13, **dadurch gekennzeichnet, dass** der vordere Bereich (2) und der hintere Bereich (4) mit Sensoren zur Messung der Wasserstoffkonzentration in den Bereichen (2, 4) versehen sind, die mit einem zentralen Kasten zur elektronischen Verwaltung der Zelle (1) verbunden sind.

## Claims

1. Motor vehicle comprising a fuel cell (1) housed in a front compartment (2) of the vehicle, connected by a supply conduit (5) to at least one hydrogen tank (3) for supplying the cell (1), said tank being housed in a rear compartment (4) of the vehicle, comprising means (5-10, 11, 12) for discharging hydrogen gases not consumed by the cell (1), **characterised in that** it comprises one or more discharge conduits (6-8) opening out in the upper part of the vehicle, so as to release the hydrogen gases substantially above the latter.

2. Motor vehicle according to Claim 1, **characterised in that** the discharge conduits (6-8) are shaped so as to open out in the rear part of the vehicle.

3. Motor vehicle according to Claim 1 or 2, **characterised in that** the discharge means (5-10, 11, 12) comprise at least one front discharge conduit (6) for the hydrogen gases emanating from the fuel cell (1), of which a front portion is connected to said cell (1) and a rear portion is provided with a substantially vertical cowl (61) opening out in the upper part of the vehicle.

4. Motor vehicle according to any one of Claims 1 to 3, **characterised in that** the discharge means (5-10, 11, 12) comprise at least one rear discharge conduit (8) for the hydrogen gases emanating from the rear compartment (4), provided with a substantially vertical cowl (81) opening out in the upper part of the vehicle.

5. Motor vehicle according to Claim 2 or 3, **characterised in that** the cowls (61, 81) of the front (6) and rear (8) discharge conduits respectively are made on either side of the lateral sides of the vehicle, in a space delimited externally by the body of the vehicle and internally by at least one adjacent structural and/or trim element.

6. Motor vehicle according to Claim 3 or 4, **characterised in** the cowls (61, 81) of the front (6) and rear (8) discharge conduits respectively are made on the same lateral side of the vehicle, in a space delimited externally by the body of the vehicle and internally by at least one adjacent structural and/or trim element.

7. Motor vehicle according to any one of Claims 1 to 6, **characterised in that** the fuel cell (1) is connected to the hydrogen tank (3) by a supply conduit (5) on which is provided at least one means for controlling and/or regulating the flow of hydrogen gas supplied to the cell (1), such as a solenoid valve (13), a pressure regulator (14, 15), or a pressure relief valve (16).

8. Motor vehicle according to Claim 7, **characterised in that** the discharge conduits (5-10, 11, 12) comprise at least one exhaust pipeline (7) connecting the hydrogen gas supply conduit (5) to one of the front (6) and/or rear (8) discharge conduits, while at least one of the means for controlling and/or regulating the flow of hydrogen gas supplied to the cell (1) is arranged on said pipeline (7).

9. Motor vehicle according to Claim 7 or 8, **characterised in that** the hydrogen gas discharge means (5-10, 11, 12) comprise a circuit (11) for bleeding and/or inerting the conduits (5, 6) and/or the fuel cell (1), capable of injecting under pressure an inert gas carried on board the vehicle into the supply conduit (5) of the cell (1), through a means (18) for automatically controlling the flow of inert gas to be injected.

10. Motor vehicle according to any one of Claims 7 to 9, **characterised in that** a circuit (12) for bleeding and/or inerting the conduits and/or the cell (1), capable of injecting under pressure an inert gas outside the vehicle into the supply conduit (5) of the cell (1), can be connected to the supply conduit (5) through a means (19) for manually controlling the flow of inert gas to be injected.

11. Motor vehicle according to any one of Claims 1 to 10, **characterised in that** the hydrogen gas discharge means (5-10, 11, 12) comprise means (9, 10) for limiting the pressure of hydrogen contained in the tank (3), such as a pressure relief valve (9) and/or a rupture disc (10) allowing instantaneous exhausting.

12. Motor vehicle according to any one of Claims 3 to 11, **characterised in that** the front discharge conduit (6) and the supply conduit (5) of the cell (1) pass side by side, over at least part of their length, near the under-structure of the vehicle.

13. Motor vehicle according to any one of Claims 1 to 12, **characterised in that** the rear compartment (4) is constituted by two half-shells (41, 42) capable of being positioned against one another at their respective contact surfaces (41s, 42s), substantially complementary in shape, a first half-shell (41) being linked rigidly to the vehicle while the second half-shell (42), in which the hydrogen tank (3) is mounted, is made integral with the vehicle via fixing means that can be dismantled manually.

14. Motor vehicle according to any one of Claims 1 to 13, **characterised in that** the front (2) and rear (4) compartments are provided with sensors capable of measuring the concentration of hydrogen in these compartments (2, 4), said sensors being connected to a central electronic control box for the cell (1).
